# FASCICULE DE BREVET EUROPEEN

(11) **EP 3 949 051 B1**
(45) Date de publication et mention de la délivrance du brevet: **22.02.2023**
(21) Numéro de dépôt: 20725843.5
(22) Date de dépôt: 05.03.2020
(51) Int. Cl.: H02G 3/36, B60R 16/02, H01R 25/00, H01R 31/00, H01R 31/06, H01R 43/20

(54) **PROCÉDÉ D'ADAPTATION D'UN FAISCEAU ÉLECTRIQUE POUR UN VÉHICULE TERRESTRE À MOTEUR**
VERFAHREN ZUR ANPASSUNG EINES ELEKTRISCHEN TRÄGERS FÜR EIN MOTORGETRIEBENES LANDFAHRZEUG
METHOD FOR ADAPTING AN ELECTRIC BEAM FOR A MOTOR-DRIVEN LAND VEHICLE

(30) Priorité: 02.04.2019 FR 1903513
(43) Date de publication de la demande: 09.02.2022
(73) Titulaire: PSA Automobiles SA, 78300 Poissy (FR)
(72) Inventeur: LE GARREC, Thierry, 78160 MARLY LE ROI (FR); DUVERGER, Pascal, 78590 NOISY LE ROI (FR)
(86) Numéro de dépôt international: PCT/FR2020/050460
(87) Numéro de publication internationale: WO 2020/201647

(56) Documents cités:
- EP-A1- 1 401 059
- WO-A2-2008/008823
- US-A- 5 639 246
- US-A- 5 971 799

## Description

### Domaine technique de l'invention

La présente invention concerne le domaine des faisceaux électriques pour véhicules terrestres à moteur. L'invention porte notamment sur un procédé d'adaptation d'un faisceau électrique pour un véhicule terrestre à moteur. L'invention porte également sur un faisceau électrique pour un véhicule terrestre à moteur adapté par la mise en oeuvre d'un tel procédé. L'invention s'applique notamment aux véhicules automobiles.

### État de la technique antérieure

On sait que les véhicules terrestres à moteur actuels, notamment les véhicules automobiles, sont pourvus d'unités de commande électronique entre lesquelles sont disposés des faisceaux électriques, i.e. des faisceaux de câbles électriques, qui permettent de faire transiter des signaux électriques et/ou des données numériques entre les unités de commande électronique afin de gérer le fonctionnement de certains organes des véhicules. Ces faisceaux électriques sont positionnés dans les véhicules lors de phases d'installation qui, généralement, interviennent très tôt dans le processus de fabrication de véhicules si bien que, après fabrication, le démontage de tels faisceaux électriques s'avère généralement très contraignant. Or, il est nécessaire lorsque l'on souhaite intégrer après fabrication des véhicules au sein de systèmes d'autopartage ou de systèmes de gestion de flotte, d'intégrer au sein des véhicules concernés des systèmes informatiques qui permettent la mise en oeuvre des fonctionnalités nécessaires au fonctionnement des systèmes d'autopartage ou de gestion de flotte. Pour ce faire, il devient alors nécessaire de raccorder ces systèmes informatiques aux différents systèmes qui gèrent le fonctionnement des véhicules, notamment aux unités de commande électronique. Généralement, ces procédés de raccordement sont réalisés au moyen de procédés d'adaptation des faisceaux électriques installés d'origine dans les véhicules, la plupart du temps en effectuant des coupures et/ou des épissures sur ceux-ci. Cependant, de tels procédés d'adaptation des faisceaux électriques qui impliquent des coupures et/ou épissures peuvent ensuite être à l'origine de sérieux problèmes qui peuvent aller des connexions imparfaites, nuisant à la bonne transmission des signaux et/ou données entre les unités de commande électronique embarquées, jusqu'au risque d'incendie des véhicules.

En outre, généralement, le parc de véhicules utilisé au sein de systèmes d'autopartage ou de gestion de flotte est voué à être périodiquement renouvelé. Cela implique que les véhicules qui ont préalablement subi des modifications pour intégrer ces systèmes doivent ensuite être de nouveau modifiés afin d'en retirer les éléments qui y ont été préalablement installés. Concrètement, cela implique que les systèmes informatiques qui ont permis la mise en oeuvre des fonctionnalités nécessaires au fonctionnement des systèmes d'autopartage ou de gestion de flotte doivent être retirés des véhicules et, par conséquent, il devient alors nécessaire d'adapter une nouvelle fois les faisceaux électriques afin qu'ils retrouvent une forme aussi proche que possible de leur forme d'origine. Or, lorsque les procédés d'adaptation des faisceaux électriques qui ont été préalablement mis en oeuvre reposent sur la réalisation de coupures ou d'épissures, il devient alors presque impossible d'adapter de nouveau les faisceaux électriques sans risquer de nouveau de voir apparaître des connexions imparfaites ou d'induire un risque d'incendie des véhicules. En effet, tout électricien sait qu'un fil électrique qui a été coupé, dont les extrémités à l'endroit de la coupure sont postérieurement raccordées ensemble, par exemple au moyen d'un manchon de raccordement, ne sera jamais aussi fiable qu'un fil électrique qui n'a jamais été coupé (e.g. risque de rupture de connexion lors de chocs, risque de création d'arc électrique, risque d'oxydation des extrémités à l'endroit de la coupure, etc.).

US 5 971 799 A divulgue un procédé d'adaptation d'un faisceau électrique pour un véhicule terrestre à moteur.

### Résumé de l'invention

L'invention vise donc à fournir un procédé pour pallier ces inconvénients. L'invention a en particulier pour but de fournir un procédé d'adaptation d'un faisceau électrique pour un véhicule terrestre à moteur afin de permettre, sans coupure, ni épissure, le raccordement dudit faisceau électrique à un système informatique configuré pour être embarqué temporairement et de manière amovible à bord d'un véhicule terrestre à moteur. Par ailleurs, l'invention a aussi pour but de fournir un procédé d'adaptation qui permet, lors du retrait du système informatique du véhicule, d'adapter de nouveau le faisceau électrique si bien qu'il retrouve une forme en tout point identique à sa forme d'origine, i.e. la forme qu'il avait lorsque le véhicule est sorti de la chaine de fabrication.

Ces buts sont atteints, selon l'invention, au moyen d'un procédé d'adaptation d'un faisceau électrique pour un véhicule terrestre à moteur afin de permettre, sans coupure, ni épissure, le raccordement dudit faisceau électrique à un système informatique configuré pour être embarqué temporairement et de manière amovible à bord d'un véhicule terrestre à moteur, ledit faisceau électrique comprenant un premier connecteur muni d'au moins une prise dans laquelle se loge de manière amovible une fiche agencée à une extrémité d'un fil électrique et un deuxième connecteur muni d'au moins une pâte, ledit deuxième connecteur étant configuré pour être connecté à une unité de commande électronique du véhicule, le procédé comprenant les étapes de :
- extraire la fiche du premier connecteur de la prise du premier connecteur pour ainsi laisser la prise du premier connecteur temporairement vacante,
- se procurer un connecteur d'appoint comprenant au moins une prise formée pour loger de manière amovible la fiche du premier connecteur et au moins un fil électrique muni, à une extrémité, d'une première fiche formée pour se loger au sein de la première prise du premier connecteur, l'autre extrémité du fil électrique du connecteur d'appoint étant raccordée au sein du connecteur d'appoint à une deuxième fiche,
- insérer la fiche du premier connecteur dans la prise du connecteur d'appoint, et
- insérer la première fiche du fil électrique du connecteur d'appoint dans la prise du premier connecteur laissée temporairement vacante à la suite de l'extraction de la fiche du premier connecteur de la prise du premier connecteur.

L'invention a en outre pour objet un faisceau électrique pour un véhicule terrestre à moteur pour un véhicule terrestre à moteur selon la revendication 2.

L'invention a en outre pour objet un véhicule terrestre à moteur qui comprend un faisceau électrique tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] représente schématiquement un faisceau électrique pour un véhicule terrestre à moteur,
[Fig. 2] représente schématiquement un faisceau électrique pour un véhicule terrestre à moteur après la mise en oeuvre d'une première étape du procédé selon l'invention,
[Fig. 3] représente schématiquement un faisceau électrique pour un véhicule terrestre à moteur après la mise en oeuvre d'autres étapes du procédé selon l'invention, et
[Fig. 4] représente schématiquement un faisceau électrique pour un véhicule terrestre à moteur après la mise en oeuvre d'une autre étape du procédé selon l'invention.

### Description détaillée de l'invention

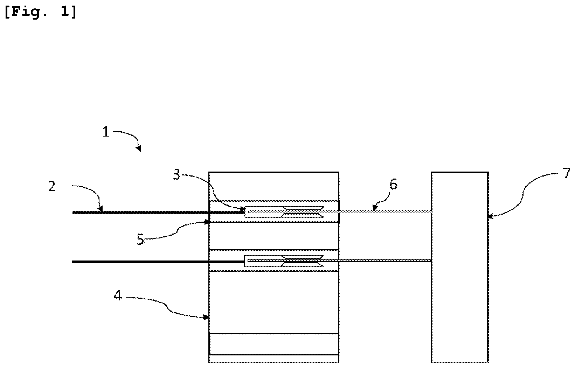

A la figure 1 est représenté schématiquement un faisceau électrique 1 pour un véhicule terrestre à moteur. Un tel faisceau électrique comprend un premier connecteur 4 muni d'une (ou plusieurs) prise(s) 5 dans laquelle (lesquelles) se loge(nt) de manière amovible une (ou plusieurs) fiche(s) 3 agencée(s) à une extrémité d'un fil électrique 2 et un deuxième connecteur 7 muni d'une (ou plusieurs) pâte(s) 6 et qui configuré pour être connecté à une unité de commande électronique du véhicule.

Dans un souci de clarté de la description, le procédé d'adaptation du faisceau électrique 1 pour un véhicule terrestre à moteur selon l'invention va maintenant être décrit en considérant uniquement les étapes relatives à un seul fil électrique 2 du faisceau électrique 1. Cependant, l'homme du métier comprendra que les mêmes étapes peuvent être reproduites pour plusieurs fils électriques du faisceau électrique 1 et, même, pour la totalité des fils électriques du faisceau électrique 1.

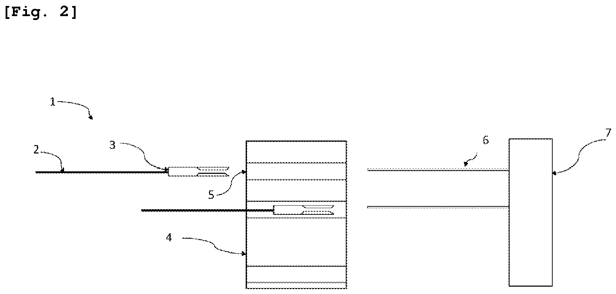

Selon une première étape du procédé d'adaptation selon l'invention, illustrée à la figure 2, le premier connecteur 4 est tout d'abord déconnecté du deuxième connecteur 7 et la fiche 3 du fil électrique 2 est extraite de la prise 5 du premier connecteur 4. Une telle opération peut être réalisé au moyen d'un tournevis ou autre objet pointu pour interagir avec un dispositif de fixation de la prise 5 qui permet de fixer de manière amovible la fiche 3 agencée à l'extrémité du fil électrique 2. Un tel dispositif de fixation peut par exemple comprendre une vis, un clip ou tout autre élément de fixation équivalent. Ainsi, on constate immédiatement que, lors de cette première étape, aucune coupure n'est réalisée sur le fil électrique 2 qui reste donc dans sa forme d'origine.

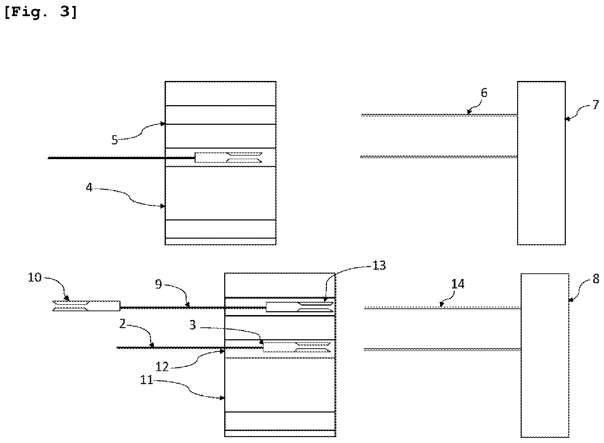

Ensuite, le procédé d'adaptation selon l'invention du faisceau électrique 1 se poursuit en mettant en oeuvre une deuxième et une troisième étape qui sont conjointement illustrées à la figure 3. La deuxième étape du procédé selon l'invention consiste à se procurer un connecteur d'appoint 11 configuré pour être connecté à une interface (ou connecteur) 8 d'un système informatique embarqué permettant l'intégration du véhicule à un système d'autopartage ou de gestion de flotte. Le connecteur d'appoint 11 comprend une (ou plusieurs) prise(s) 12 formée(s) pour loger de manière amovible la fiche 3 extraite du premier connecteur 4 au cours de l'étape précédente et au moins un fil électrique 9, ou câble électrique, muni, à une extrémité, d'une fiche 10 formée pour se loger au sein de la prise 5 du premier connecteur 4, l'autre extrémité du fil électrique 9 du connecteur d'appoint 11 étant raccordée à une fiche 13 formée pour se connecter à une pâte 14 de l'interface 8. Ensuite, lors de la troisième étape du procédé selon l'invention, le fiche 3 du fil électrique 2 est insérée dans la prise 12 du connecteur d'appoint 11. Ainsi, à la suite de ces deux étapes du procédé d'adaptation selon l'invention, aucune coupure ni épissure n'est réalisée sur le fil 2 du faisceau électrique 1.

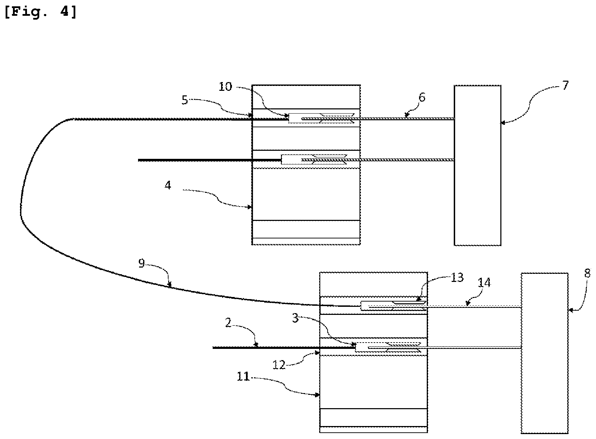

Enfin, une ultime étape du procédé d'adaptation du faisceau électrique 1 selon l'invention, illustrée schématiquement à la figure 4, consiste à connecter la fiche 10 agencée à l'extrémité du fil électrique 9 du connecteur d'appoint 11 à la prise 5 du premier connecteur 4 laissée temporairement vacante à la suite de la première étape du procédé qui a consisté à extraire la fiche 3 du premier connecteur 4 de la prise 5 du premier connecteur 4.

Par conséquent, aux termes du procédé selon l'invention, il devient possible de raccorder un système informatique amovible au faisceau électrique sans qu'aucune modification irréversible du faisceau électrique n'ait été opérée. En effet, l'homme du métier comprendra que, lorsqu'il devient nécessaire de retirer le système informatique amovible du véhicule, les étapes décrites ci-dessus peuvent être mises en oeuvre de manière inversée afin que le faisceau électrique puisse recouvrer une forme en tout point identique à sa forme d'origine, i.e. celle qu'il avait lorsque le véhicule est sorti de la chaîne de fabrication du véhicule. En outre, on comprend également que le procédé selon l'invention permet une adaptation d'un faisceau électrique sans qu'il y ait besoin de réaliser aucune coupure ou épissure sur les fils électriques, ou câbles, qui forment le faisceau électrique, ce qui contribue à assurer l'intégrité totale de la transmission de signaux et/ou données entre chacun des connecteurs d'un faisceau électrique adapté par la mise en oeuvre du procédé selon l'invention et sans qu'aucune étape du procédé ne puisse être la source d'un quelconque risque d'incendie du véhicule.

## Revendications

1. Procédé d'adaptation d'un faisceau électrique (1) pour un véhicule terrestre à moteur afin de permettre, sans coupure, ni épissure, le raccordement dudit faisceau électrique à un système informatique configuré pour être embarqué temporairement et de manière amovible à bord d'un véhicule terrestre à moteur, ledit faisceau électrique comprenant un premier connecteur (4) muni d'au moins une prise (5) dans laquelle se loge de manière amovible une fiche (3) agencée à une extrémité d'un fil électrique (2) et un deuxième connecteur (7) muni d'au moins une pâte (6), ledit deuxième connecteur (7) étant configuré pour être connecté à une unité de commande électronique du véhicule, **caractérisé en ce que** le procédé comprend les étapes de :
- extraire la fiche (3) du premier connecteur (4) de la prise (5) du premier connecteur (4) pour ainsi laisser la prise (5) du premier connecteur (4) temporairement vacante,
- se procurer un connecteur d'appoint (11) comprenant au moins une prise (12) formée pour loger de manière amovible la fiche (3) du premier connecteur (4) et au moins un fil électrique (9) muni, à une extrémité, d'une première fiche (10) formée pour se loger au sein de la première prise (5) du premier connecteur (4), l'autre extrémité du fil électrique (9) du connecteur d'appoint (9) étant raccordée au sein du connecteur d'appoint à une deuxième fiche (13),
- insérer la fiche (3) du premier connecteur (4) dans la prise (12) du connecteur d'appoint (11), et
- insérer la première fiche (10) du fil électrique (9) du connecteur d'appoint (11) dans la prise (5) du premier connecteur (4) laissée temporairement vacante à la suite de l'extraction de la fiche (3) du premier connecteur (4) de la prise (5) du premier connecteur (4).

2. Faisceau électrique (1) pour un véhicule terrestre à moteur adapté par la mise en oeuvre du procédé selon la revendication 1;
comprenant un premier connecteur (4) muni d'au moins une prise (5) dans laquelle se loge de manière amovible une fiche (3) agencée à une extrémité d'un fil électrique (2) et un deuxième connecteur (7) muni d'au moins une pâte (6), ledit deuxième connecteur (7) étant configuré pour être connecté à une unité de commande électronique d'un véhicule terrestre à moteur,
comprenant un connecteur d'appoint (11) comprenant au moins une prise (12),
au moins un fil électrique (9) muni, à une extrémité, d'une première fiche (10), et l'autre extrémité du fil électrique (9) du connecteur d'appoint (9) étant raccordée au sein du connecteur d'appoint à une deuxième fiche (13).

3. Véhicule terrestre à moteur, **caractérisé en ce qu'**il comprend un faisceau électrique selon la revendication 2.

## Patentansprüche

1. Verfahren zur Anpassung eines elektrischen Kabelbaums (1) für ein motorisiertes Landfahrzeug, um ohne Unterbrechung oder Spleißung den Anschluss des elektrischen Kabelbaums an ein Computersystem zu ermöglichen, das so konfiguriert ist, dass es vorübergehend und abnehmbar an Bord eines motorisierten Landfahrzeugs mitgenommen werden kann, wobei der elektrische Kabelbaum einen ersten Stecker (4) mit mindestens einer Buchse (5), in der ein an einem Ende eines elektrischen Drahtes (2) angeordneter Stecker (3) lösbar untergebracht ist, und einen zweiten Stecker (7) mit mindestens einer Paste (6) umfasst, wobei der zweite Stecker (7) so konfiguriert ist, dass er mit einer elektronischen Steuereinheit des Fahrzeugs verbunden werden kann, **dadurch gekennzeichnet, dass** das Verfahren die folgenden Schritte umfasst: :
- Herausziehen des Steckers (3) des ersten Verbinders (4) aus der Buchse (5) des ersten Verbinders (4), um dadurch die Buchse (5) des ersten Verbinders (4) vorübergehend leer zu lassen,
- Bereitstellen eines Hilfsverbinders (11) mit mindestens einer Buchse (12), die so geformt ist, dass sie den Stecker (3) des ersten Verbinders (4) lösbar aufnimmt, und mindestens einem elektrischen Draht (9), der an einem Ende mit einem ersten Stecker (10) versehen ist, der so geformt ist, dass er innerhalb der ersten Buchse (5) des ersten Verbinders (4) aufgenommen werden kann, wobei das andere Ende des elektrischen Drahtes (9) des Hilfsverbinders (9) innerhalb des Hilfsverbinders mit einem zweiten Stecker (13) verbunden ist,
- den Stecker (3) des ersten Verbinders (4) in die Buchse (12) des Zusatzverbinders (11) einführen, und
- Einführen des ersten Steckers (10) der elektrischen Leitung (9) des Zusatzverbinders (11) in die Buchse (5) des ersten Verbinders (4), die infolge des Herausziehens des Steckers (3) des ersten Verbinders (4) aus der Buchse (5) des ersten Verbinders (4) vorübergehend freigelassen wurde.

2. Elektrischer Kabelbaum (1) für ein motorisiertes Landfahrzeug, der durch die Durchführung des Verfahrens nach Anspruch 1 angepasst wird; mit einem ersten Verbinder (4), der mit mindestens einer Buchse (5) versehen ist, in die ein an einem Ende eines elektrischen Drahtes (2) angeordneter Stecker (3) lösbar passt, und einem zweiten Verbinder (7), der mit mindestens einer Paste (6) versehen ist, wobei der zweite Verbinder (7) so konfiguriert ist, dass er mit einer elektronischen Steuereinheit eines motorbetriebenen Landfahrzeugs verbunden werden kann, mit einem Zusatzverbinder (11), der mindestens eine Buchse (12), mindestens eine elektrische Leitung (9), die an einem Ende mit einem ersten Stecker (10) versehen ist, und das andere Ende der elektrischen Leitung (9) des Zusatzverbinders (9) umfasst, das innerhalb des Zusatzverbinders mit einem zweiten Stecker (13) verbunden ist.

3. Motorisiertes Landfahrzeug, **dadurch gekennzeichnet, dass** es einen elektrischen Kabelbaum nach Anspruch 2 umfasst.

## Claims

1. Method of adapting an electrical harness (1) for a land motor vehicle in order to allow, without cutting or splicing, the connection of said electrical harness to a computer system configured to be temporarily and removably carried on board a land motor vehicle, said method comprising said electrical harness comprising a first connector (4) provided with at least one socket (5) in which a plug (3) arranged at one end of an electrical wire (2) is removably housed, and a second connector (7) provided with at least one paste (6), said second connector (7) being configured to be connected to an electronic control unit of the vehicle, **characterised in that** the method comprises the steps of :
- extracting the plug (3) of the first connector (4) from the socket (5) of the first connector (4) thereby leaving the socket (5) of the first connector (4) temporarily vacant,
- providing a booster connector (11) comprising at least one socket (12) formed to removably house the plug (3) of the first connector (4) and at least one electrical wire (9) provided at one end with a first plug (10) formed to fit within the first socket (5) of the first connector (4), the other end of the electrical wire (9) of the booster connector (11) being connected within the booster connector to a second plug (13),
- insert the plug (3) of the first connector (4) into the socket (12) of the booster connector (11), and
- inserting the first plug (10) of the electrical wire (9) of the booster connector (11) into the socket (5) of the first connector (4) left temporarily vacant following the removal of the plug (3) of the first connector (4) from the socket (5) of the first connector (4).

2. An electrical harness (1) for a land motor vehicle adapted by the implementation of the method according to claim 1 ; comprising a first connector (4) provided with at least one socket (5) in which a plug (3) arranged at one end of an electric wire (2) is removably housed, and a second connector (7) provided with at least one paste (6), said second connector (7) being configured to be connected to an electronic control unit of a land motor vehicle, comprising a booster connector (11) comprising at least one socket (12), at least one electrical wire (9) provided at one end with a first plug (10), and the other end of the electrical wire (9) of the booster connector (9) being connected within the booster connector to a second plug (13).

3. A motorized land vehicle, **characterized in that** it comprises an electrical harness according to claim 2.
